# EUROPEAN PATENT APPLICATION

(11) **EP 3 449 785 A1**
(43) Date of publication of application: **06.03.2019**
(21) Application number: 18188070.9
(22) Date of filing: 08.08.2018
(51) Int. Cl.: A47J 37/06, A47J 37/10

(54) **FOOD CARRIER**

(30) Priority: 31.08.2017 EP 17188733
(71) Applicant: ELECTROLUX APPLIANCES AKTIEBOLAG, 105 45 Stockholm (SE)
(72) Inventor: WESTRE, Sandra, 105 45 Stockholm (SE); SCANDELARI, Rodrigo, 105 45 Stockholm (SE)
(74) Representative: Electrolux Group Patents

(57) **Abstract**

A food carrier (1) comprising an insertion (2) having a surface (3) on which food can be cooked, wherein the food carrier (1) comprises a heatable support structure (5) that is adapted to support said insertion (2).

## Description

The present invention relates generally to the field of enhanced cooking experience and more specifically to enhancing the flavor of fried food.

From US9420800B1 an oven appliance including a baking stone positioned within a cooking chamber is known. However, influencing the flavor of the food being baked using the baking stone is not intended there. The known pizza stone ovens can principally only influence the flavor of the food by the effect of the enhanced heat transfer via the heated stone to the food during cooking.

Further, on the Internet so-called Himalayan salt stone cooking has been described, as can be found searching e.g. in Google. Wherein a slab of solid stone salt is arranged over fire, e.g. on a barbecue, for heating the salt stone slab and for frying food thereon. The advantage of that cooking style is that the food is shielded from the fire during cooking and the salt of the stone may further attribute to the flavor of the food being barbecued.

Today however, no devices for salt stone cooking are available that are adapted to the requirements of cooking in kitchen cookers such as e.g. electrically heated cookers. Further, no devices for the convenient handling of salt stone slabs during cooking or for cooling after cooking are known. Still further, the conventional salt stone slabs are prone to be broken by cracks that form easily during rapid heating.

The present invention aims at solving the described problems of the prior art. The problem of the invention is solved with the features of claim 1 and of independent claim 15. Favourable embodiments of the invention are provided in the dependent claims.

According to a first aspect of the present invention a food carrier is provided that comprises an insertion having a surface on which food can be cooked, wherein the food carrier comprises a heatable support structure that is adapted to support said insertion.

For example, the insertion is a stone salt slab, a teppanyaki insert, a barbeque insert or a pancake insert. The food carrier may have a modular structure with the support structure on the one hand and the exchangeable stone salt slab, teppanyaki insert, barbeque insert and/or pancake insert on the other hand.

The stone salt slab is preferably formed from mineral stone salt such as e.g. Himalayan stone salt. It provides flavor to the food during frying. It is heated by heat transfer from the support structure that unites the two functions of holding the stone salt slab and of transferring evenly heat to the stone salt slab. The support structure is adapted to being itself efficiently heatable, e.g. by a cooking hob on which it is arranged, and to efficiently transfer the heat to the stone. For that, the support structure is formed at least in part from a heat-conducting material, such as a metal.

In a favourable embodiment, the support structure comprises a ferromagnetic metal that can be heated via magnetic induction by an induction cooker, e.g. such as cast iron or stainless steel, thereby allowing to heat the stone salt lap via induction cooking indirectly by heat transfer from the support structure. For that, preferably at least a central region of the support structure that is adapted to support the insertion is formed of metal, still preferably of a ferromagnetic metal.

The food carrier of the invention can comprise one, two or several insertions.

The food carrier can be formed advantageously from stainless steel, from sheet metal such as e.g. stainless steel sheet, and/or in a single piece from sheet metal or from cast iron.

The food carrier can comprise at least one laterally arranged handle, preferably two opposingly arranged handles. A handle can comprises a heat-insulating material, e.g. it can be formed from it or can be coated by it or comprise an inlay of it, to allow safe handling of the hot food carrier by a user. Any known heat-insulating material such is known in cooking ware can be used as appropriate.

With advantage, the support structure of the food carrier can comprise at least one peripheral rim that restricts a movement of said stone salt slab in the horizontal plane, thus avoiding that the salt stone slap can slip unintendedly from the support structure during handling of the food carrier. There can be peripheral rims on all four sides of a rectangular stone salt lab. Handles can for example be integrated or attached to two opposing rims.

If the support structure is formed of sheet metal, one or more rims can conventiently formed by bending upwardly an edge of the metal sheet. In that case, in addition handles can be formed in upwardly bended rims, e.g. as cut outs in rims that extend sufficiently high upwards or by attaching handles to rims.

In further preferred embodiments of the invention the proneness of the stone salt slab to form cracks in conditions of too fast heating is efficiently decreased. To that effect, the support structure of the food carrier can comprise one or more support element(s) with a minimized contact area for supporting the stone salt slab, wherein said support element(s) extend upwardly from the support structure. In that way, the heat from the heated support element is conducted slowly via the support element(s) to the lower side of the stone salt slab. The support element(s) can have any suitable number and shape. For example in the form of one or more straight or curved ridges and/or formed essentially as a pointed hill or star. Suitable geometries can be readily found relying on the principles of stably supporting the stone salt slab while reducing its contact area with the support structure.

A further embodiment that efficiently decreases the proneness of the stone salt slab to form cracks during heating foresees to form at least one and preferably a plurality of grooves in the lower surface of the stone salt slab, thereby decreasing its contact area with the support structure during heating and enhancing an even entry and spread of the heat into the stone salt slab.

According to a particularly preferred embodiment of the food carrier of the invention the support structure has a flat bottom that is adapted to be arranged on a glass ceramic cooking hob, still preferably wherein at least the central region of the support structure is formed of a ferromagnetic metal that can be heated via magnetic induction.

According to a second aspect of the invention, a food carrier is provided that comprises a stone salt slab having a surface on which food can be cooked, wherein the stone salt slab comprises at least one permanently or releasably fastened heat-transferring attachment. The attachment can be formed from a heat-conducting material, such as a metal. In particular from a ferromagnetic metal that can be heated via magnetic induction, thereby allowing to heat the stone salt lap via induction cooking indirectly by heat transfer from the heat-transferring attachment. The attachment can be attached externally on a surface of the stone salt slab or it can be inserted fully or in part into openings of a surface of the stone salt slab. For example bars of metal can be inserted into grooves formed in a surface of the stone salt slab. Heat-transferring attachment are preferably associated with the lower surface of the stone salt slab which is opposite to the cooking surface thereof. Still in alternative, heat-transferring attachments, such as metal bars, can be inserted into drillings that extend deeply into the stone salt slab, preferably ferromagnetic metal attachments will be used that can be heated by electromagnetic induction. Preferred embodiments of the second aspect of the invention comprise additional features of the invention that have been described above in relation to the first aspect of the invention, in particular as referenced in the dependent claims.

Preferred embodiments of the present invention are described schematically below by reference to the drawings.
- Fig. 1: is a perspective view of a food carrier in accordance with the first aspect of the present invention;
- Fig. 2: is a perspective side view of the food carrier of Fig. 1 arranged on a glass ceramic cooking hob;
- Fig. 3: is a perspective drawing of a stone salt slab forming part of the food carrier of the present invention;
- Fig. 4: is a perspective drawing of a first example of a support structure forming part of the food carrier of the present invention;
- Fig. 5: is a lateral side view of the support structure of Fig. 4;
- Fig. 6: is a frontal side view of the support structure of Fig. 4;
- Fig. 7: is a top view of the support structure of Fig. 4;
- Fig. 8: is a perspective bottom view drawing of a further embodiment of a stone salt slab forming part of the food carrier of the present invention;
- Fig. 9: is a perspective bottom view drawing of an embodiment of a stone salt slab in accordance with the second aspect of the present invention,
- Fig. 10: is a perspective drawing of a second example of the support structure forming part of the food carrier of the present invention,
- Fig. 11: is a perspective drawing of a teppanyaki insert on the second example of the support structure according to the present invention,
- Fig. 12: is a perspective drawing of a barbeque insert on the second example of the support structure according to the present invention,
- Fig. 13: is a perspective drawing of a pancake insert on the second example of the support structure according to the present invention,
- Fig. 14: is a perspective drawing of a third example of the support structure forming part of the food carrier of the present invention,
- Fig. 15: is a perspective drawing of a further teppanyaki insert on the third example of the support structure according to the present invention,
- Fig. 16: is a perspective drawing of a further barbeque insert on the third example of the support structure according to the present invention, and
- Fig. 17: is a perspective drawing of a further pancake insert on the third example of the support structure according to the present invention.

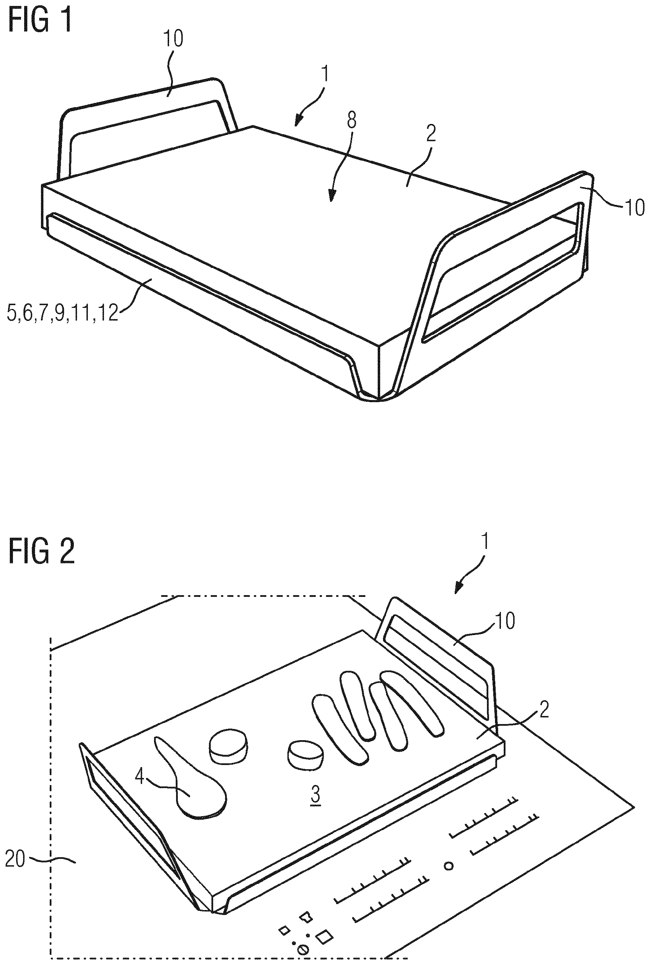

Figs. 1 to 3 show a food carrier 1 according to a first aspect of the present invention that comprises a stone salt slab 2 with a surface 3 on which food can be cooked, wherein the food carrier 1 comprises a heatable support structure 5 that is adapted to support said stone salt slab 2.

The stone salt slab 2 provides flavor to the food 4 during frying. It is heated by heat transfer from the support structure 6 that holds the stone salt slap 2 and that is itself heatable, e.g. by a cooking hob 20 on which it is arranged, because the support structure 5 is formed at least in part from a heat-conducting material, such as a metal 6.

In a favourable embodiment, the support structure 5 comprises a ferromagnetic metal 7 that can be heated via magnetic induction by an induction cooker, e.g. such as cast iron or stainless steel 6, thereby allowing to heat the stone salt slab 2 via induction cooking indirectly on an induction hob 20. For that, preferably at least a central region 8 of the support structure 5 that is adapted to support the stone salt slab 2 is formed of metal 6, still preferably of a ferromagnetic metal 7.

The food carrier of the invention can comprise one, two or several stone salt slabs (not shown).

The food carrier can be formed from sheet metal 9 such as e.g. stainless steel sheet, and/or in a single piece from sheet metal 9 or from cast iron.

The food carrier 1 can comprise at least one laterally arranged handle 10, preferably two opposingly arranged handles 10. A handle can comprises a heat-insulating material (not shown).

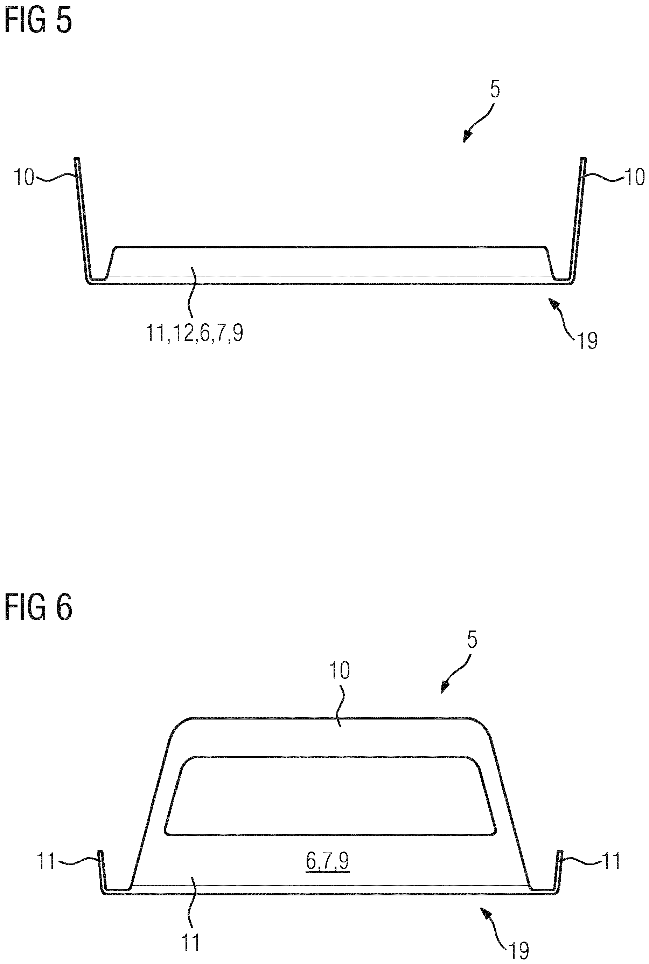

As visible especially from Figs. 1 and 4 to 6, the support structure 5 of the food carrier 1 can comprise at least one rim 11 that restricts a movement of said stone salt slab 2 in the horizontal plane, thus avoiding that the salt stone slap 2 can slip unintendedly from the support structure 5 during handling of the food carrier 1. There can be rims 11 on all four sides of a rectangular stone salt lab 2. Handles 10 can for example be integrated or attached to two opposing rims 11.

The support structure 5 can be formed of sheet metal 9, and one or more rims 11 can conventiently be formed by bending upwardly an edge of the metal sheet. In that case, in addition handles 10 can be formed in upwardly bended rims 11, e.g. as cut outs in rims 11 that extend sufficiently high upwards or by attaching handles 10 to rims 11 (not shown).

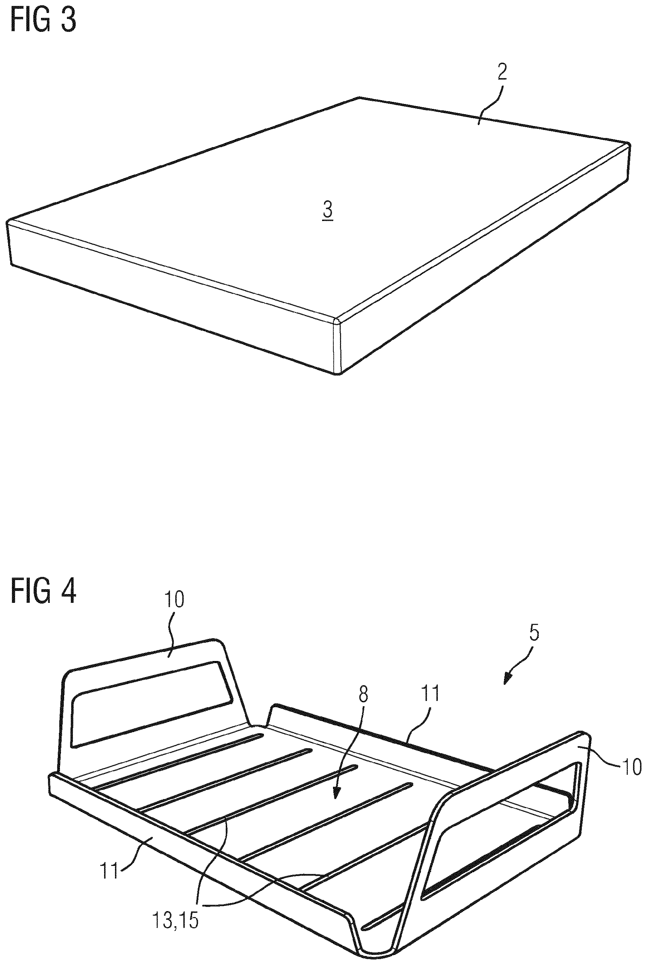

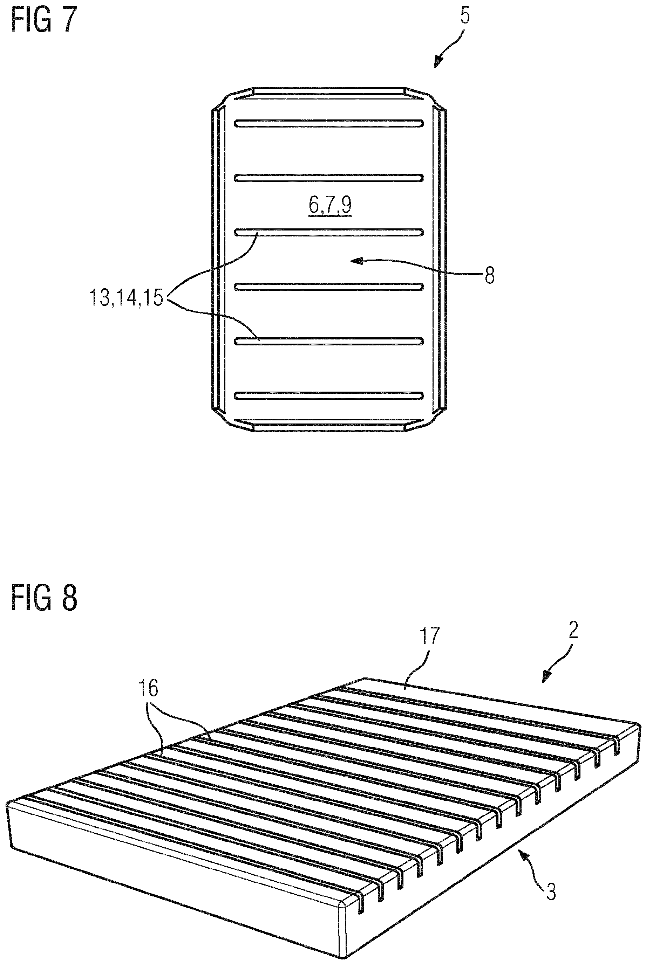

As shown in Figs. 4 and 7, the support structure 5 of the food carrier 1 can comprise one or more support element (s) 13 with a minimized contact area 14 for supporting the stone salt slab 2, wherein said support element(s) 13 extend upwardly from the support structure 5. In that way, the heat from the heated support element 5 is conducted slowly via the support element(s) 13 to the lower surface 17 of the stone salt slab 2 efficiently avoiding cracks in the stone salt slab caused by too fast heating. The support element(s) 13 can have any suitable number and shape. For example in the form of one or more straight or curved ridges 15 and/or formed essentially as a pointed hill or star (not shown).

Fig. 8 shows a further embodiment that efficiently decreases the proneness of the stone salt slab to form cracks during heating. The stone salt slab 2 comprises a plurality of grooves 16 that are formed in its lower surface 17 and decrease its contact area with the support structure 5 during heating.

According to a particularly preferred embodiment of the food carrier 1 of the invention as shown in the Figs. 1 and 2, the support structure 5 has a flat bottom 19 that is adapted to be arranged on a glass ceramic cooking hob 20, still preferably wherein at least the central region 8 of the support structure is formed of a ferromagnetic metal 7 that can be heated via magnetic induction.

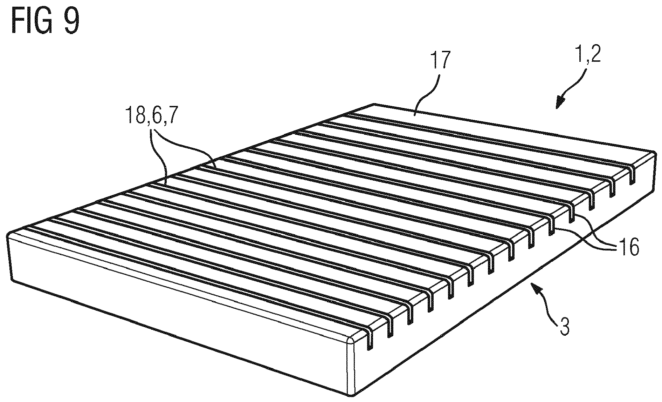

Fig. 9 shows a second aspect of the invention that provides a food carrier 1 that comprises a stone salt slab 2 having a surface 3 on which food can be cooked, wherein the stone salt slab 2 comprises at least one permanently or releasably fastened heat-transferring attachment 18. The attachment 18 can be formed from a heat-conducting material, such as a metal 6. In particular from a ferromagnetic metal 7 that can be heated via magnetic induction, thereby allowing to heat the stone salt lap via induction, e.g. by placing the food carrier 1 of the second aspect of the invention directly on an induction cooking hob (not shown). The attachments 18 can be attached externally on a surface 17 of the stone salt slab 2 as shown in Fig. 9, or it can be inserted fully or in part into openings of a surface of the stone salt slab (not shown). For example bars of metal 18, 6, 7 can be inserted into grooves 16 formed in a surface (3, not shown), 17 of the stone salt slab.

Heat-transferring attachments 18 are preferably associated with the lower surface 17 of the stone salt slab which is close to the cooking surface thereof. Still in alternative (not shown), heat-transferring attachments 18, such as metal bars, can be inserted into drillings that extend deeply into the stone salt slab 2, preferably ferromagnetic metal attachments will be used that can be heated by electromagnetic induction.

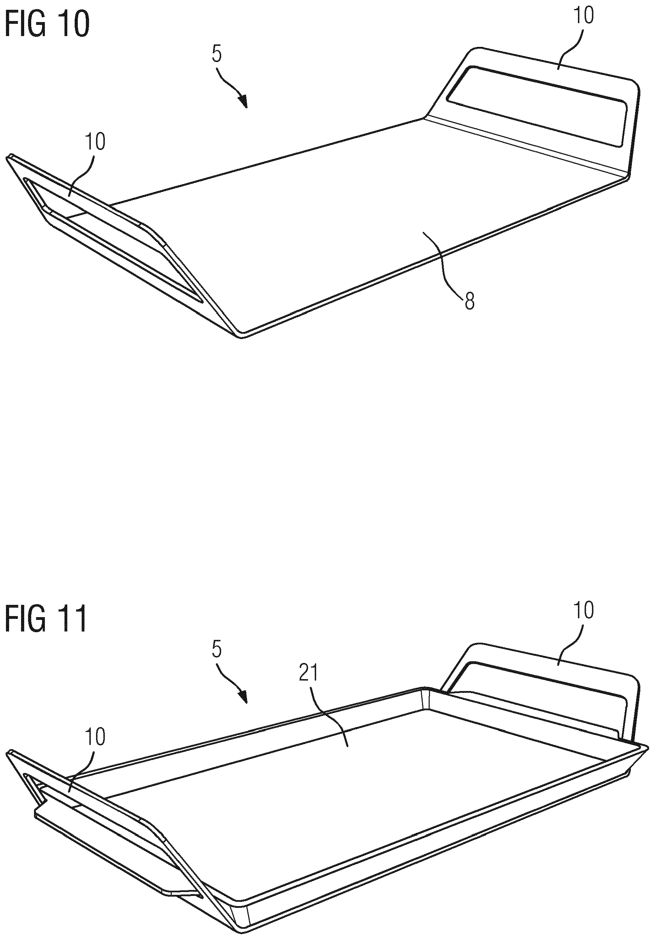

Fig. 10 shows a perspective drawing of a second example of the support structure 5 forming part of the food carrier 1 of the present invention. The central region 8 of said support structure 5 is smooth surface. The handles 10 are arranged at the narrow sides of the support structure 5. In this example, the handles 10 are inclined. The support structure 5 of the second example is formed without rims at the longitudinal sides. Preferably, the support structure 5 is made of stainless steel. Moreover, the support structure 5 may be made of a ferromagnetic material, so that the food carrier 1 is heatable by induction coils.

Fig. 11 shows a perspective drawing of a teppanyaki insert 21 on the second example of the support structure 5 according to the present invention. The teppanyaki insert 21 includes a rectangular sheet with a smooth surface. Said sheet is enclosed by the rim. At each narrow side of the teppanyaki insert 21 an appendix is formed at the rim. Said appendix penetrates a cut-out in the handle 10. For example, the teppanyaki insert 21 is made of cast iron.

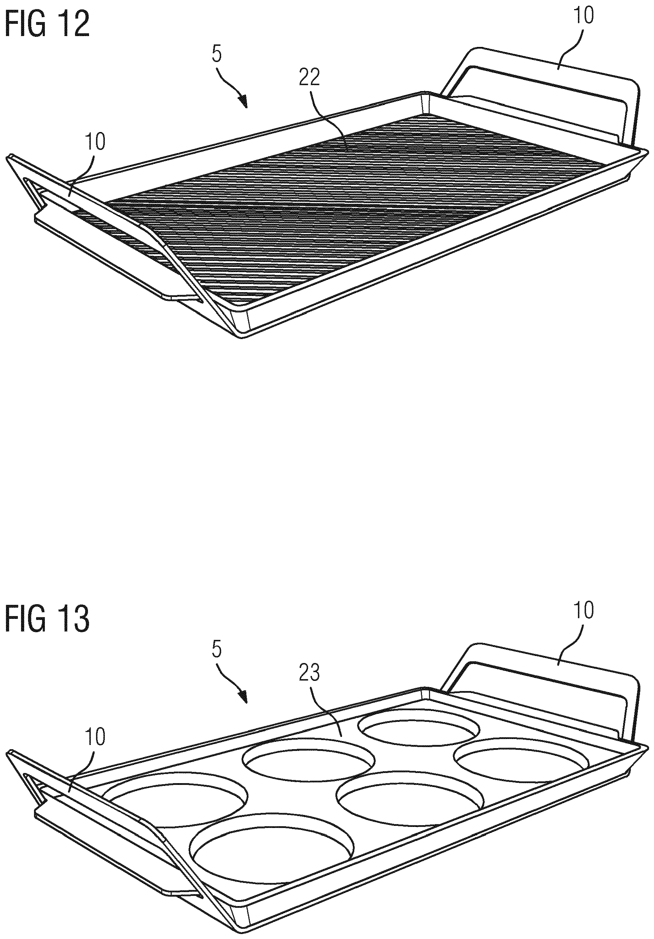

Fig. 12 shows a perspective drawing of a barbeque insert 22 on the second example of the support structure 5 according to the present invention. The barbeque insert 22 includes a rectangular sheet with a ribbed surface. A plurality of ribs extends diagonally on said sheet. Further, the sheet is enclosed by the rim. At each narrow side of the barbeque insert 22 an appendix is formed at the rim. Said appendix penetrates the cut-out in the handle 10. For example, the barbeque insert 22 is made of cast iron.

Fig. 13 shows a perspective drawing of a pancake insert 23 on the second example of the support structure 5 according to the present invention. The pancake insert 23 includes a rectangular sheet with recesses for pancakes. In this example, the pancake insert 23 includes six circular recesses for pancakes. Also in this case, the sheet is enclosed by the rim. At each narrow side of the pancake insert 23 an appendix is formed at the rim. Said appendix penetrates the cut-out in the handle 10. For example, the pancake insert 23 is made of cast iron.

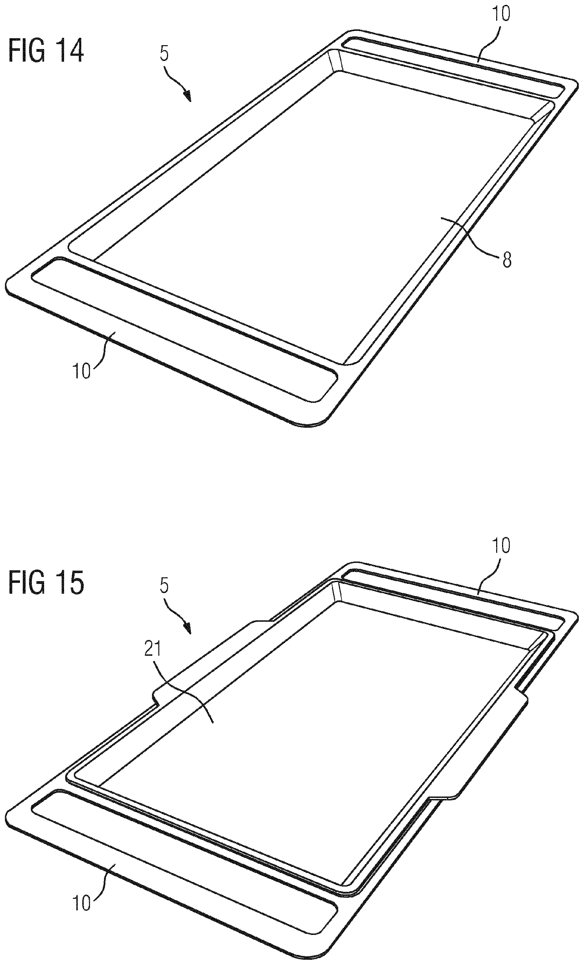

Fig. 14 shows a perspective drawing of a third example of the support structure 5 forming part of the food carrier 1 of the present invention. The central region 8 of said support structure 5 is smooth surface. A rim encloses said central region. The handles 10 are arranged at the narrow sides of the support structure 5. In this example, the handles 10 extend horizontally. Preferably, the support structure 5 is made of stainless steel. Moreover, the support structure 5 may be made of a ferromagnetic material, so that the food carrier 1 is heatable by induction coils.

Fig. 15 shows a perspective drawing of a further teppanyaki insert 21 on the third example of the support structure 5 according to the present invention. The teppanyaki insert 21 includes a rectangular sheet with a smooth surface. Said sheet is enclosed by the rim. In the central portion of each longitudinal side of the teppanyaki insert 21 an appendix is formed at the rim. Said appendices are provided for gripping the teppanyaki insert 21 by the user. For example, the teppanyaki insert 21 is made of cast iron.

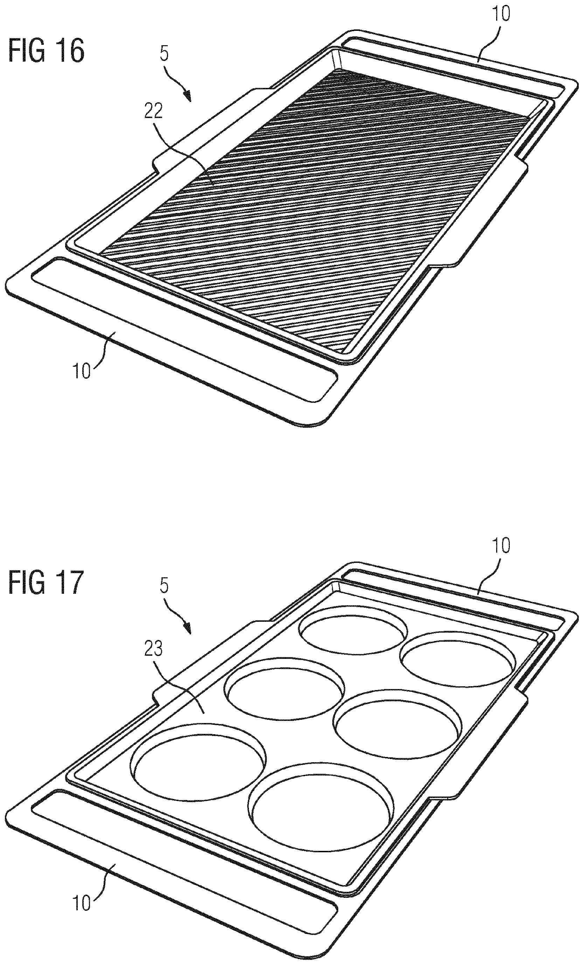

Fig. 16 shows a perspective drawing of a further barbeque insert 22 on the third example of the support structure 5 according to the present invention. The barbeque insert 22 includes a rectangular sheet with the ribbed surface. The plurality of ribs extends diagonally on said sheet. Further, the sheet is enclosed by the rim. In the central portion of each longitudinal side of the barbeque insert 22 the appendix is formed at the rim, wherein said appendices are provided for gripping the barbeque insert 22 by the user. For example, the barbeque insert 22 is made of cast iron.

Fig. 17 shows a perspective drawing of a further pancake insert 23 on the second example of the support structure 5 according to the present invention. The pancake insert 23 includes a rectangular sheet with recesses for pancakes. In this example, the pancake insert 23 includes six circular recesses for pancakes. Also in this case, the sheet is enclosed by the rim. In the central portion of each longitudinal side of the pancake insert 23 the appendix is formed at the rim, wherein said appendices are provided for gripping the pancake insert 23 by the user. For example, the pancake insert 23 is made of cast iron.

The food carrier according to the present invention has a modular structure with the support structure on the one hand and the exchangeable stone salt slab, teppanyaki insert, barbeque insert and/or pancake insert on the other hand. The exchangeable insertions can be easily removed. The support structure with the insertion can be easily placed in the cooking oven. The insertions can be placed in a dishwasher.

### Reference signs

- 1: food carrier
- 2: stone salt slab
- 3: surface
- 4: food
- 5: support structure
- 6: heat-conducting metal
- 7: ferromagnetic metal
- 8: central region
- 9: sheet metal
- 10: handle
- 11: rim
- 12: folded lateral region
- 13: support element
- 14: minimized contact area
- 15: ridge
- 16: groove
- 17: lower surface of stone salt slab
- 18: attachment
- 19: bottom of support structure
- 20: hob
- 21: teppanyaki insert
- 22: barbeque insert
- 23: pancake insert

## Claims

1. A food carrier (1) comprising an insertion (2, 21, 22, 23) having a surface (3) on which food (4) can be cooked, **characterized in that**
the food carrier (1) comprises a heatable support structure (5) that is adapted to support said stone salt slab (2).

2. The food carrier (1) of claim 1, **characterized in that** the insertion is a stone salt slab (2), a teppanyaki insert (21), a barbeque insert (22) or a pancake insert (23).

3. The food carrier (1) of claim 1 or 2, **characterized in that** the heatable support structure (5) is adapted to heat the insertion (2, 21, 22, 23) via heat conduction.

4. The food carrier (1) of claims 1 or 2, wherein the support structure (5) comprises a heat-conducting metal (6), preferably a ferromagnetic metal (7) that can be heated via magnetic induction by an induction cooker, e.g. such as cast iron or stainless steel.

5. The food carrier (1) of any of claims 1 to 3, **characterized in that** said support structure (5) comprises a central region (8) that is adapted to support at least one of said insertion (2, 21, 22, 23).

6. The food carrier (1) of any of claim 1 to 4, characterized that at least said central region (8) of the support structure (5) is formed of metal, in particular is formed of sheet metal (9), preferably of stainless steel, or of cast iron.

7. The food carrier (1) of claim 5 that is formed essentially from in a single piece from sheet metal, preferably from sheet metal (9) stainless steel, or from cast iron.

8. The food carrier (1) of any of the preceding claims, **characterized in that** the support structure (5) comprises at least one laterally arranged handle (10), preferably comprises two opposingly arranged handles (10), in particular wherein said at least one handle (10) comprises a heat-insulating material.

9. The food carrier (1) of any of the preceding claims,
wherein the support structure (5) comprises at least one rim (11) for restricting a movement of said insertion (2, 21, 22, 23) in the horizontal plane.

10. The food carrier (1) of any of claims 6 to 8, wherein at least one of said rim (11) is formed by a folded lateral region (12) of said piece of sheet metal (9).

11. The food carrier (1) of any of claims 1 to 9, wherein the support structure (5) comprises at least one support element (13) comprising a minimized contact area (14) for supporting the stone salt slab (2), and wherein preferably the at least one support element (13) is extends upwardly from the bottom of said central region (8) of the support structure (5).

12. The food carrier of claim 11, wherein said support element (13) is formed as at least one linear or curved ridge (15) and/or is formed essentially as a pointed hill star.

13. The food carrier of any of claims 1 to 12, wherein the insertion (2, 21, 22, 23) comprises at least one groove (16) that is formed in its lower surface (17) that is supported by the support structure (5).

14. The food carrier of any of claims 1 to 13, **characterized in that** the support structure (5) has a flat bottom (19) that is adapted to be arranged on a glass ceramic cooking hob (20), preferably wherein at least the central region (8) of the support structure (5) is formed of a ferromagnetic metal (7) that can be heated via magnetic induction.

15. A food carrier, in particular of any of claims 1 to 14, comprising an insertion (2, 21, 22, 23) having a surface (3) on which food (4) can be cooked, **characterized in that** the insertion (2, 21, 22, 23) comprises at least one permanently or releasably fastened heat-transferring attachment (18).
